# FASCICULE DE BREVET EUROPEEN

(11) **EP 1 551 265 B1**
(45) Date de publication et mention de la délivrance du brevet: **10.12.2008**
(21) Numéro de dépôt: 03753847.7
(22) Date de dépôt: 16.10.2003
(51) Int. Cl.: A47K 4/00

(54) **LOCAL SANITAIRE POLYVALENT**
MEHRZWECKSANITÄRRAUM
MULTIPURPOSE SANITARY INSTALLATION

(30) Priorité: 17.10.2002 FR 0212917
(43) Date de publication de la demande: 13.07.2005
(73) Titulaire: Habegger, Virgile, 1073 Savigny (CH)
(72) Inventeur: Habegger, Virgile, 1073 Savigny (CH)
(74) Mandataire: Bugnion Genève
(86) Numéro de dépôt international: PCT/IB2003/004654
(87) Numéro de publication internationale: WO 2004/034863

(56) Documents cités:
- EP-A- 0 365 320
- DE-A- 19 651 451
- US-A- 3 869 732

## Description

La présente invention a pour objet un local sanitaire polyvalent rectangulaire, en particulier carré, comprenant essentiellement deux espaces distincts, à savoir un espace pour la toilette sèche, comprenant essentiellement un lavabo et un.wc, et une salle d'eau rectangulaire.

Du brevet FR 1 379 768 on connaît un ensemble d'hygiène domestique constitué de trois enceintes distinctes formant respectivement une salle de toilette comportant un lavabo, une salle d'eau comportant une cuve-baignoire et un cabinet d'aisance comportant un wc, ces enceintes pouvant être groupées de façon voulue pour former un ensemble cohérent dans lequel la salle d'eau est entièrement occupée par une cuve circulaire communiquant avec la salle de toilette par une porte dont le seuil est formé par le rebord de la cuve. Dans un mode d'exécution, les trois enceintes sont en enfilade et la salle d'eau occupe toute la largeur du local. La salle de toilette ou toilette sèche comporte en outre un lit de repos qui peut être également un lit médical. Chacune des enceintes a une destination qui lui est propre et comporte l'installation d'articles sanitaires appropriés, ce qui lui permet d'être utilisée séparément et simultanément avec les deux autres, sans que les usagers correspondants se gênent réciproquement. L'inconvénient de ce local est toutefois d'occuper une surface d'environ 8m², ce qui était supérieur aux normes en vigueur en matière de construction avant l'adoption des normes relatives aux besoins des personnes handicapé.

Du brevet DE-A-196 51 451 on connaît un local sanitaire polyvalent d'une taille réduite comprenant toutes les caractéristiques du préambule de la revendication 1.

L'invention a essentiellement pour but de réduire la longueur du local tout en conservant les dimensions de la salle d'eau prévue dans le brevet FR 1 379 768 et en offrant la possibilité de disposer d'un espace de toilette sèche suffisamment grand pour y disposer, en longueur, un lit de repos tel que prévu dans le brevet FR 1 379 768.

Ce but est atteint par le local sanitaire polyvalent selon la revendication 1.

L'élément mobile peut être déplaçable jusqu'au fond du local, de telle sorte que la surface de la salle d'eau peut varier entre pratiquement zéro et une valeur maximale déterminée.

Selon un premier mode d'exécution, la salle d'eau est délimitée par trois parois contiguës du local dont les parois sont, par paires, de longueurs différentes.

Selon un mode d'exécution, les parois du local présentent une corniche et l'élément mobile est constitué d'une cloison suspendue sur la corniche et munie de moyens de roulement sur cette corniche

La cloison mobile peut en outre présenter des volumes de rangement.

Selon un mode d'exécution de l'invention, l'espace pour la toilette sèche comprend un siège fixe jouxtant la cloison mobile en position de surface maximale de la salle d'eau, ce siège étant transformable en lit de repos lorsque la cloison mobile est repoussée au fond de la salle d'eau.

Selon des modes d'exécution, le local sanitaire selon l'invention comprend un élément auxiliaire utilisable alternativement comme banquette ou comme paroi de retenue d'eau dans la salle d'eau, c'est-à-dire comme quatrième paroi d'une baignoire ou d'une pataugeoire rectangulaire dont les trois autres côtés sont formés par les parois du local.

Comme l'élément auxiliaire utilisé comme paroi de retenue d'eau, doit assurer une étanchéité dans son contact avec les parois et le sol du local, le local comprend des moyens pour appliquer l'élément auxiliaire contre le sol et contre les parois latérales du local.

Selon un mode d'exécution, les parois latérales du local présentent une console présentant une face inférieure inclinée, de telle sorte que l'espace entre le sol et la console diminue progressivement en direction des parois respectives, en ce que les plus petites faces étroites de l'élément auxiliaire, ainsi qu'au moins l'une de ses longues faces étroites est élastiquement déformable et que la longueur et la hauteur de l'élément auxiliaire, libres de contraintes, sont respectivement légèrement supérieures à la largeur du local et à la plus petite distance entre les consoles et le sol, de telle manière que lorsque l'élément auxiliaire est en place, il est comprimé longitudinalement entre les parois du local et verticalement entre les consoles et le sol, et l'élément auxiliaire est revêtu d'un rembourrage élastique étanche et qu'il contient des moyens propres d'extension de ses dimensions permettant d'appliquer l'élément auxiliaire contre les parois du local et contre le sol.

Selon un autre mode d'exécution, le local est carré et la salle d'eau est délimitée par deux parois du local et par une paroi intérieure.

D'autres caractéristiques de modes d'exécution possibles seront évoquées au cours de la description d'un mode d'exécution de l'invention faite en relation au dessin annexé.

Ainsi, comme dans l'art antérieur, la salle d'eau est utilisable aussi bien pour le bain que pour la douche et accessoirement comme pataugeoire.

Le dessin annexé représente, à titre d'exemples, deux modes d'exécution principaux de l'invention.
La figure 1 est une vue schématique, en plan, d'un second mode d'exécution du local sanitaire.
La figure 2 est une vue schématique, en perspective, de la salle d'eau et de l'espace technique du local selon figure 1.
La figure 3 est une vue de côté du banc/bain du second mode d'exécution.
La figure 4 est une vue du bout de ce banc/bain.
La figure 5 est une vue schématique, en plan, de la salle d'eau équipée du banc/bain.
La figure 6 en est une vue schématique en élévation.
La figure 7 représente une digue de retenue d'eau.
La figure 8 est une vue en bout de cette digue.
La figure 9 en est une vue en coupe.
La figure 10 est une vue schématique, en élévation, du local montrant la mise en place de la digue de retenue.
La figure 11 est une vue schématique, en plan, des moyens de nettoyages et de rangement.

Le local d'une première mode d'exécution non-illustrée est de forme rectangulaire. Il peut constituer une partie d'un bâtiment ou, avantageusement, une enceinte préfabriquée en forme de parallélépipède rectangulaire préfabriqué et livrable complètement équipé. Cette enceinte peut être réalisée en tout matériau approprié.

L'enceinte présente une entrée pouvant être fermée par une porte à deux vantaux. Facultativement, l'enceinte pourra présenter deux baies.

L'enceinte est divisée en deux espaces, un espace pour la toilette sèche A et une salle d'eau B pour le bain et la douche. Les espaces A et B sont séparés par une cloison en forme de caisson. La cloison est déplaçable dans le sens de la flèche de manière à faire varier des surfaces des espaces A et B.

L'espace de toilette sèche A comprend une cloison oblique délimitant un espace triangulaire dans l'un des angles de l'espace A. L'espace abrite les gaines techniques, pompes, conduit d'évacuation d'eau usée, etc. Perpendiculairement à la paroi est montée une porte coulissante, laquelle coopère avec une paroi intérieure auxiliaire pour fermer un sous espace constituant un W.C. équipé d'une cuvette suspendue. De l'autre côté de la porte coulissante, est disposé un lavabo en face d'un miroir.

La cloison mobile est munie d'une porte centrale. L'un des côtés de la porte est subdivisé en compartiments de rangement, pour le rangement de serviettes et de produits de toilette. L'autre côté de la porte forme un caisson vertical dans lequel est montée une brosse ronde entraînable en rotation autour d'un axe vertical. Au dessus de la porte, sur toute la largeur de la cloison mobile, s'étend un caisson contenant une brosse ronde rotative.

Le long des parois latérales de la salle d'eau B s'étendent deux consoles à une hauteur d'environ 40 cm au dessus du sol.

Comme il a été mentionné plus haut, la cloison mobile peut être déplacée parallèlement à elle-même dans la salle d'eau de manière à réduire la surface de celle-ci et à augmenter la surface de l'espace A pour la toilette sèche. A cet effet, la cloison mobile est munie, de chaque côté, dans sa partie supérieure, d'un train de roulement constitué de deux galets, ces galets roulant dans des rails formés ou fixés dans deux corniches et situées à environ 2m du sol. On voit que les corniches, s'étendent presque jusqu'au fond de la salle d'eau de telle sorte que la cloison peut être repoussée au fond de la salle d'eau. La surface de la salle d'eau varie donc pratiquement entre la valeur maximale et zéro, le portique 7 présente des décrochements pour les passages des consoles 15.

Le local est en outre équipé d'un élément auxiliaire dont la forme générale est un panneau parallélépipédique rectangulaire. Cet élément auxiliaire est destiné à être utilisé soit comme banquette, soit comme paroi de retenue de l'eau de sorte qu'il sera dénommé par la suite tout simplement banc-bain. Ce banc-bain est en matériau léger de manière à pouvoir être manipulé aisément par tout utilisateur. Ses extrémités et au moins l'une de ses faces étroites longitudinales est revêtue ou constituée d'un matériau élastique, par exemple en caoutchouc, et le banc-bain présente une longueur légèrement supérieure à la distance séparant les parois latérales du local et une largeur légèrement supérieure à la hauteur H des consoles mesurée contre les parois latérales du local.

Lorsque le banc-bain est utilisé comme banquette, il est simplement posé à plat sur les consoles.

Lorsqu'il est utilisé comme cloison de retenue d'eau, il est engagé par une légère rotation autour d'un axe vertical, sous les consoles avec sa tranche déformable élastiquement sur le sol.

Les consoles présentent une face inférieure légèrement inclinée, de telle sorte que l'engagement du banc-bain sous les consoles a pour effet, d'une part, de comprimer verticalement le banc-bain et donc de presser sa face élastiquement déformable contre le sol et, d'autre part, de comprimer le banc-bain longitudinalement entre les parois opposées du local. L'étanchéité est ainsi réalisée.

Dans le cas où il est prévu d'utiliser également le banc-bain pour délimiter une pataugeoire, l'une au moins des grandes faces du banc-bain sera également élastiquement déformable et des consoles auxiliaires seront prévues sur les parois latérales du local pour presser le banc-bain, posé à plat, contre le sol et assurer l'étanchéité de la pataugeoire.

Dans des variantes d'exécution, le banc-bain peut être équipé de moyens propres pour son extension axiale et transversale.

Les brosses cylindriques et rotatives servent au lavage automatique de la salle d'eau. La brosse horizontale nettoie le plafond, le mur du fond et le sol, ainsi que les parois latérales au dessus des corniches, au dessus de ses extrémités. Pour le lavage du plafond, la brosse est guidée par les rails des corniches. Après avoir balayé le plafond, la brosse est guidée pour balayer la face côté salle d'eau de la cloison mobile et, ayant atteint le sol, elle balaye le sol et les côtés de la salle d'eau situés en dessous des consoles.

La brosse verticale est utilisée pour balayer les parois verticales de la salle d'eau, entre les corniches et les consoles. Elle effectue un aller-retour pour revenir dans son logement dans la cloison mobile. La brosse horizontale peut bien entendu être utilisée pour nettoyer le banc-bain. Divers moyens mécaniques peuvent être utilisés pour déplacer et guider les brosses, par exemple des bras télescopiques ou des pantographes. L'entraînement en rotation des brosses est avantageusement assuré au moyen d'arbres flexibles.

Le local sanitaire selon l'invention peut être exécuté de mille manières plus ou moins sophistiquées. Dans sa version la plus simple, la cloison mobile peut être dépourvue de moyens de rangement et de brosses. Selon une variante particulière, les parois latérales du local présentent des gâches verticales dans lesquelles sont enfilés les bancs-bain pour former un bassin et le banc-bain est équipé, à ses extrémités, de taquets rétractables munis d'une rampe destinée à créer la pression verticale sur le banc-bain.

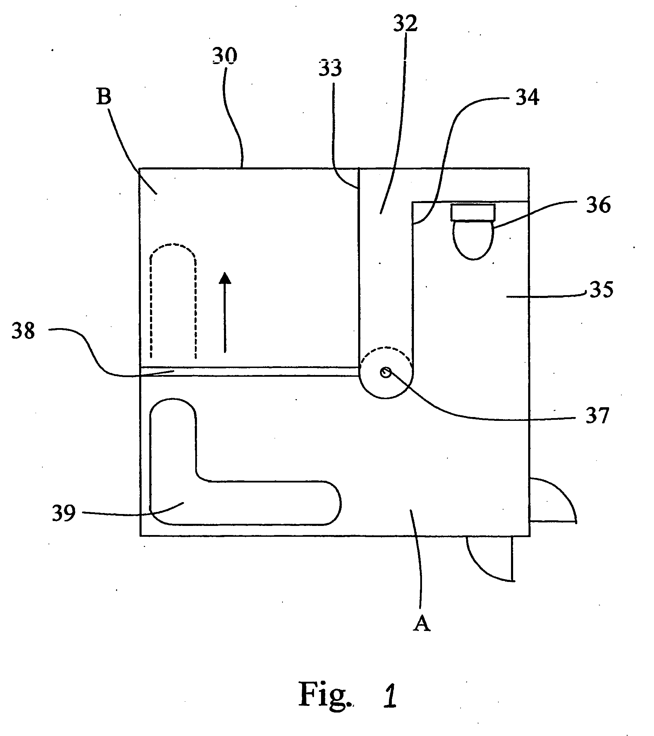

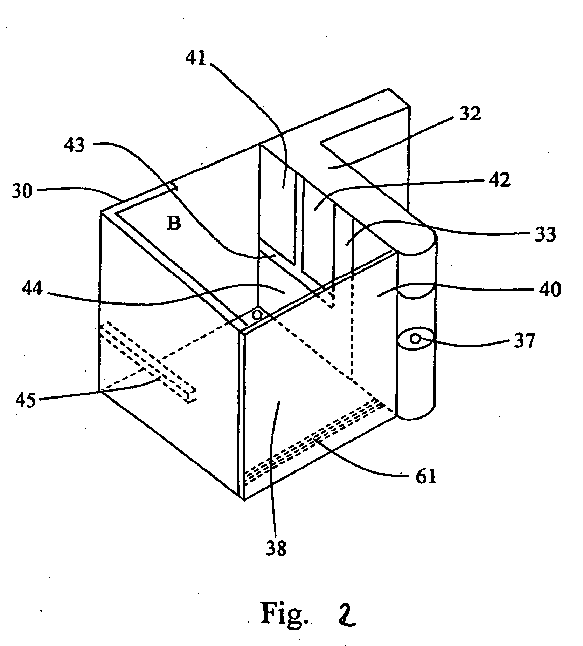

Un second mode d'exécution sera maintenant décrit en relation aux figures 1 à 11.

Comme ceci ressort au premier coup d'oeil de la figure 1, ce mode d'exécution se distingue essentiellement du premier mode d'exécution par la forme carrée du local 30 et en ce que la salle d'eau B n'occupe qu'une partie des côtés du carré. En outre, la porte coulissante, la cloison oblique et l'espace triangulaire du premier mode d'exécution sont avantageusement synthétisés en un espace technique 32 en forme de L, la jambe du L étant formée par deux parois parallèles 33 et 34, la paroi 33 limitant la salle d'eau, tandis que la paroi 34 délimite un espace rectangulaire 35 dans lequel est disposé un WC 36. Un lavabo 37 est avantageusement situé à l'extrémité intérieure de l'espace technique 32. On retrouve une cloison mobile 38 déplaçable dans le sens de la flèche. Devant le lavabo 37, s'étend la salle de toilette sèche A dans laquelle est disposé un lit de repos 39 monté sur roulettes et articulé. L'espace technique 32 abrite non seulement les conduites d'eau, d'électricité et d'air, ainsi que les conduites d'évacuation d'eau et d'air, mais également des moyens de nettoyage qui seront décrits plus loin et cet espace sert également d'armoire de rangement du banc/bain et autre dispositif auxiliaire dont il sera également question plus loin.

La totalité des équipements est ainsi réunie en un ensemble compact formant un sous-ensemble susceptible d'être réalisé en usine. En outre, la position centrale de l'espace technique 32 permet de réaliser des locaux sanitaires de surfaces variables en modifiant simplement la largeur de la salle d'eau, ainsi que la largeur de la salle de toilette sèche. Ces caractéristiques augmentent les possibilités d'implantation du local sanitaire.

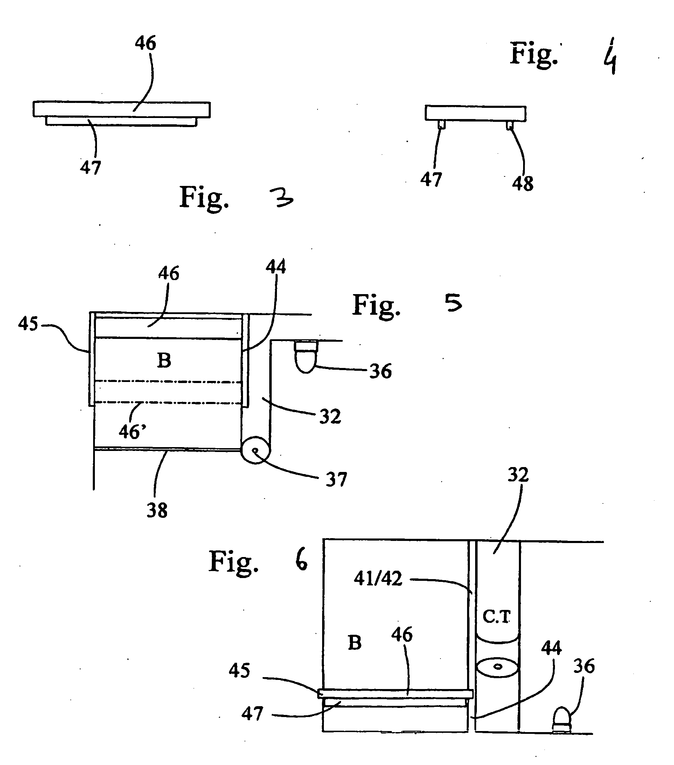

La paroi 33 de l'espace technique 32 présente, à proximité du lavabo 37, une première porte 40 s'étendant sur toute la hauteur de la salle d'eau. La paroi 33 présente en outre deux portes plus petites 41 et 42 s'étendant du plafond sur une partie de la hauteur de la salle d'eau, environ 45 cm au dessus du sol, de manière à laisser subsister un interstice 43 entre le bas de ces portes et la partie inférieure de la paroi 33, de manière à former une sorte de muret 44 s'étendant au dessous des portes 41 et 42. Dans la paroi du local sanitaire opposée à la paroi 33 est formée une rainure horizontale 45 de section rectangulaire et dont la face inférieure est située au même niveau que le haut du muret 44. Cette rainure et ce muret sont destinés à supporter une banquette 46 représentée aux figures 3 et 4. Cette banquette 46, est munie sur sa face inférieure, de deux baguettes parallèles 47, 48 de longueur inférieure à la banquette et servant, d'une part, à positionner longitudinalement la banquette entre la paroi 33 et la paroi opposée et, d'autre part, à positionner transversalement la banquette sur un élément de retenue d'eau comme ceci sera décrit plus loin. L'une des portes 41 ou 42 peut être repoussée à l'intérieur pour faciliter la mise en place de la banquette 46. La banquette 46 en place est représentée aux figures 5 et 6. Comme illustré à la figure 5, la banquette 46 peut être déplacée d'un bout à l'autre de l'encoche 45 et du muret 44 pour occuper, par exemple, la position 46'. Les dimensions de la banquette sont, par exemple, 160 x 30 x 10 cm.

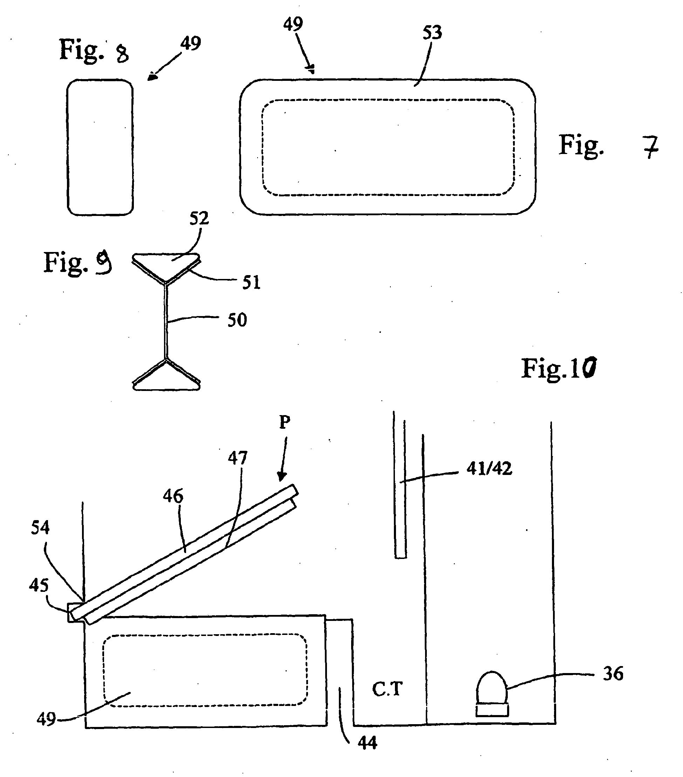

Dans ce mode d'exécution, la banquette 46 n'est pas directement utilisable comme élément de retenue d'eau, mais elle en constitue néanmoins un moyen essentiel. La retenue de l'eau proprement dite est assurée par un élément de retenue auxiliaire 49 représenté aux figures 7 à 9. Cet élément de retenue d'eau est avantageusement conçu comme une roue de voiture, c'est-à-dire avec une partie rigide, par exemple en métal léger, présentant une âme ou voile 50 de forme rectangulaire, dont le pourtour présente un profil en V 51 (figure 9) dans lequel est logée une garniture 52 élastiquement déformable et éventuellement compressible, par exemple en caoutchouc. Le profil 51 pourrait également être en U ou similaire, L'ensemble représenté à la figure 9 est en outre recouvert d'une housse étanche 53. L'élément de retenue 49 présente, par exemple, les dimensions suivantes : longueur 150 cm, largeur 20 cm, hauteur 35 cm. Dans tous les cas, sa longueur est sensiblement égale à la largeur de la salle d'eau, et sa hauteur nettement supérieure à la hauteur du muret 44 et au niveau de la face inférieure de la rainure 45.

La mise en place de l'élément de retenue d'eau est illustrée à la figure 10. L'élément de retenue 49 est tout d'abord dressé verticalement à l'endroit désiré de la salle d'eau, situé entre les extrémités de la rainure 45. Cette mise en place se fait avec une faible compression des côtés verticaux de l'élément de retenue 49, c'est-à-dire sans effort particulier, la faible compression étant juste suffisante pour maintenir l'élément 49 en position. La banquette 46 est ensuite introduite obliquement dans la rainure 45 comme représenté à la figure 10, au dessus de l'élément de retenue 49, de telle sorte que ses baguettes 47 et 48 viennent de chaque côté de l'élément de retenue 49. On abaisse ensuite la banquette 46 en exerçant une pression P sur son autre extrémité. On utilise ainsi la banquette 46 comme levier avec le bord supérieur 54 de la rainure 45 comme point d'appui. La porte 41 ou 42 située en face de la banquette 46 est ouverte vers l'intérieur de l'espace technique. On peut ainsi amener l'extrémité libre de la banquette 46 sur le muret 44, puis on referme la porte 41, 42 correspondante, de telle sorte que celle-ci vient retenir verticalement la banquette 46, en maintenant la compression exercée par la banquette 46 sur l'élément de retenue 49. Cet élément de retenus 49 est ainsi plaqué contre le sol et également contre les parois latérales de la salle d'eau par la déformation de la garniture 52, en assurant l'étanchéité de l'espace ainsi formé.

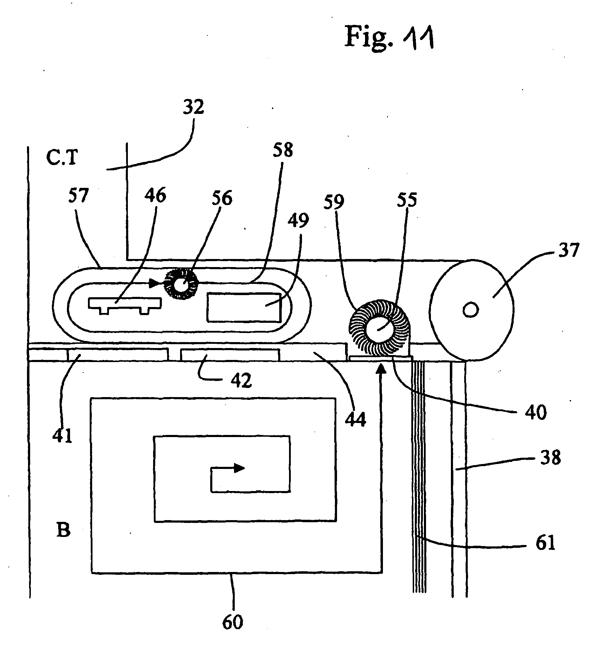

L'espace technique 32 sert également d'espace de rangement pour la banquette 46 et l'élément de retenue d'eau 49, ainsi que pour deux brosses cylindriques rotatives d'axe vertical 55 et 56, comme représenté à la figure 11.

La banquette 46 est rangée en face de la porte 41, tandis que l'élément de retenue d'eau 49 est rangée en face de la porte 42. Les emplacements de rangement et la brosse 56 sont situés dans un logement 57 de forme ovale s'étendant du sol au plafond du local et servant de collecteur des eaux du trop plein du bain, ainsi que des écoulements du lavabo 37 et de la douche. La brosse mécanisée 56 est entraînable le long d'un rail selon un circuit 58 assurant le nettoyage du logement 57, y compris parois et plafond, et simultanément de la banquette 46 et de l'élément de retenue d'eau 49.

La brosse 55 est logée au repos dans un logement 59 situé juste derrière la porte 40. En utilisation, la brosse 55 se déplace le long d'un rail formant un chemin 60, approximativement en spirale, à l'intérieur de la salle d'eau, de manière à nettoyer totalement cette salle d'eau, c'est-à-dire aussi bien les parois que le sol et le plafond.

La partie inférieure du logement 59 de la brosse 55 comporte un bassin que la brosse 55 nettoie également et qui se trouve sur le passage des eaux allant d'une grille d'écoulement 61 à l'écoulement central.

## Revendications

1. Local sanitaire polyvalent rectangulaire, en particulier carré, comprenant essentiellement deux espaces distincts, à savoir un espace pour la toilette sèche (A) comprenant un lavabo et un WC et une salle d'eau rectangulaire (B), utilisable pour un bain une douche, et/ou comme pataugeoire, le sol de la salle d'eau étant approximativement plat et la salle d'eau étant délimitée, d'une part, par au moins deux parois contiguës du local et, d'autre part, par un élément mobile (38) de telle sorte que la surface de la salle d'eau (B) peut varier et avec elle la surface de l'espace pour la toilette sèche (A), **caractérisé en ce que** l'élément mobile (38) est perpendiculaire à un côté du local et déplaçable dans une direction parallèle audit côté en restant perpendiculaire audit côté.

2. Local sanitaire selon la revendication1, **caractérisé en ce que** l'élément mobile (38) est déplaçable jusqu'au fond de la salle d'eau, de telle sorte que la surface de la salle d'eau peut varier entre pratiquement zéro et une valeur maximale déterminée.

3. Local sanitaire selon la revendication 2, **caractérisé en ce que** les parois latérales de la salle d'eau présentent une corniche et **en ce que** l'élément mobile est constitué d'une cloison suspendue sur les corniches et munie de moyens de roulement sur ces corniches.

4. Local sanitaire selon la revendication 3, **caractérisé en ce que** la cloison mobile présente des volumes de rangement.

5. Local sanitaire selon l'une des revendications 1 à 4, **caractérisé en ce qu'**il comprend un élément auxiliaire, de forme sensiblement parallélépipédique rectangulaire utilisable alternativement comme banquette ou comme paroi de retenue d'eau dans la salle d'eau, c'est-à-dire comme quatrième paroi d'un baignoire ou d'une pataugeoire rectangulaire dont les trois autres côtés sont formés par les parois du local.

6. Local sanitaire selon la revendication 5, **caractérisé en ce qu'**il comprend des moyens pour appliquer de manière étanche l'élément auxiliaire contre le sol et contre les parois latérales du local.

7. Local sanitaire selon la revendication 6, **caractérisé en ce que** les parois latérales de la salle d'eau présentent une console présentant une face inférieure inclinée, de telle sorte que l'espace entre le sol et la console diminue progressivement en direction des parois respectives, **en ce que** les plus petites faces étroites de l'élément auxiliaire, ainsi qu'au moins l'une de ses longues faces étroites est élastiquement déformable et que la longueur et la hauteur de l'élément auxiliaire, libres de contraintes, sont respectivement légèrement supérieures à la largeur du local et à la plus petite distance entre les consoles et le sol, de telle manière que lorsque l'élément auxiliaire est en place, il est comprimé longitudinalement entre les parois de la salle d'eau et verticalement entre les consoles et le sol.

8. Local sanitaire selon la revendication 6, **caractérisé en ce que** l'élément auxiliaire est revêtu d'un rembourrage élastique étanche et qu'il contient des moyens propres d'extension de ses dimensions permettant d'appliquer l'élément auxiliaire contre les parois de la salle d'eau et contre le sol.

9. Local sanitaire selon la revendication 4, **caractérisé en ce que** la cloison mobile présente, dans sa partie supérieure, un compartiment s'étendant sur toute la largeur de la cloison et contenant une brosse cylindrique rotative autour d'un axe horizontal, mécanisée et déplaçable, un compartiment vertical contenant une brosse cylindrique d'axe vertical rotative mécanisée et déplaçable et **en ce que** le local comprend des moyens d'entraînement des brosses en rotation et en translation de manière à nettoyer toutes les surfaces de la salle d'eau.

10. Local sanitaire selon la revendication 1 ou 2, **caractérisé en ce que** la salle d'eau (B) est délimitée par deux parois contiguës du local et par une paroi intérieure (33) constituée de la paroi d'un espace technique fermé (32) dont une partie au moins est située à distance de la paroi opposée du local de manière à former un espace utile (35).

11. Local sanitaire selon la revendication 10, **caractérisé en ce que**, dans la salle d'eau (B) la paroi du local opposée au local technique présente une rainure horizontale (45) et que la partie inférieure de la paroi (33) du local technique forme un muret (44), ce muret et ladite rainure étant destinés à soutenir une banquette (46).

12. Local sanitaire selon la revendication 11, **caractérisé en ce qu'**il comprend un élément de retenue d'eau dont le pourtour est compressible, cet élément de retenue étant pressé contre le sol et les parois de la salle d'eau par la banquette (46).

13. Local sanitaire selon la revendication 12, **caractérisé en ce que** l'élément de retenue (49) est constitué d'une âme rigide (50) dont le pourtour présente un profil en V ou en U ou similaire, dans lequel est retenue une garniture (52) élastiquement déformable.

14. Local sanitaire selon l'une des revendications 1,2 ou 13, **caractérisé en ce que** la paroi de l'espace technique (33) limitant la salle d'eau présente au moins une porte (41, 42) dont le côté inférieur est situé à un niveau légèrement supérieur à la hauteur de l'élément de retenue d'eau (49), de telle sorte que la banquette (46) peut tre introduite obliquement, par l'une de ses extrémités, dans la rainure (45) de la paroi du local, puis abaissée sur l'élément de retenue d'eau en le comprimant, la banquette étant maintenue dans sa position de compression par la porte (41,42) ramenée dans sa position fermée.

15. Local sanitaire selon l'une des revendications 10 à 14, **caractérisé en ce que** l'espace technique (32) abrite une brosse cylindrique rotative (55) d'axe vertical, motorisée, et **en ce que** le plafond de la salle d'eau présente un rail de support et de guidage de la brosse formant un chemin (60) assurant le nettoyage complet de la salle d'eau.

16. Local sanitaire selon la revendication 15, **caractérisé en ce que** l'espace technique (32) sert également d'espace de rangement de la banquette (46) et de l'élément de retenue d'eau (49) et **en ce qu'**il abrite une seconde brosse cylindrique rotative motorisée (56) pour le nettoyage de la banquette de l'élément de retenue d'eau et de leur espace de rangement (57).

## Claims

1. A rectangular, particularly square, multipurpose sanitary facility comprising essentially two distinct spaces, that is a space for the dry dressing room (A) comprising a washbasin and a WC and a rectangular wet room (B),which can be used for a bath, for a shower and/or as a splash pool, the floor of the wet room being approximately flat and the wet room being delimited, on the one hand, by at least two contiguous walls of the facility and, on the other hand, by a movable element (38), so that the surface area of the wet room (B) may vary and with it the surface area of the space for the dry dressing room (A), **characterized in that** the movable element (38) is perpendicular to one side of the facility and movable in a parallel direction to said side by remaining perpendicular to said side.

2. The sanitary facility as claimed in claim 1, wherein the movable element (38) can be moved to the end of the wet room, so that the surface area of the wet room may vary between practically zero and a maximal determined value.

3. The sanitary facility as claimed in claim 2, wherein the lateral walls of the wet room have a cornice and wherein the movable element consists of a partition suspended on the cornices and furnished with means of rolling on these cornices.

4. The sanitary facility as claimed in claim 3, wherein the movable partition has storage volumes.

5. The sanitary facility as claimed in one of claims 1 to 4, which comprises an auxiliary element, of substantially rectangular parallelepipedic shape that can be used alternately as a banquette or as a water retention wall in the wet room, that is to say as a fourth wall of a bath or of a rectangular splash pool whose other three sides are formed by the walls of the facility.

6. The sanitary facility as claimed in claim 5, which comprises means for pressing the auxiliary element in a sealed manner against the floor and against the lateral walls of the facility.

7. The sanitary facility as claimed in claim 6, wherein the lateral walls of the wet room have a console having a bottom face inclined such that the space between the floor and the console diminishes progressively towards the respective walls, wherein the smallest narrow faces of the auxiliary element and at least one of its long narrow faces is elastically deformable and that the length and the height of the auxiliary element, free of pressure, are respectively slightly greater than the width of the facility and at the shortest distance between the consoles and the floor, such that when the auxiliary element is in place, it is compressed longitudinally between the walls of the wet room and vertically between the consoles and the floor.

8. The sanitary facility as claimed in claim 6, wherein the auxiliary element is coated with a sealed elastic padding and it contains its own means of extending its dimensions making it possible to press the auxiliary element against the walls of the wet room and against the floor.

9. The sanitary facility as claimed in claim 4, wherein the movable partition has, in its upper portion, a compartment extending across the whole width of the partition and containing a cylindrical brush, mechanized and movable, that rotates about a horizontal axis, a vertical compartment containing a rotary cylindrical brush with a vertical axis, mechanized and movable, and wherein the facility comprises means of driving the brushes in rotation and in translation in order to clean all the surfaces of the wet room.

10. The sanitary facility as claimed in claim 1 or 2, wherein the wet room (B) is delimited by two contiguous walls of the facility and by an internal wall (33) consisting of the wall of an enclosed technical space (32) of which at least one partition is situated away from the opposite wall of the facility in order to form a useful space (35).

11. The sanitary facility as claimed in claim 10, wherein, in the wet room (B), the wall of the facility opposite the technical space has a horizontal groove (45) and the bottom portion of the wall (33) of the technical space forms a low wall (44), this low wall and said groove being intended to support a banquette (46).

12. The sanitary facility as claimed in claim 11, which comprises a water retention element whose periphery is compressible, this retention element being pressed against the floor and the walls of the wet room by the banquette (46).

13. The sanitary facility as claimed in claim 12, wherein the retention element (49) consists of a rigid core (50) whose periphery has a V-shaped or U-shaped or similar profile, in which an elastically deformable packing (52) is held.

14. The sanitary facility as claimed in one of claims 1, 2 or 13, wherein the wall of the technical space (33) limiting the wet room has at least one door (41, 42) whose bottom edge is situated at a level slightly higher than the height of the water retention element (49), so that the banquette (46) can be inserted obliquely, by one of its ends, into the groove (45) of the wall of the facility, can be lowered onto the water retention element while compressing it, the banquette being held in its compression position by the door (41, 42) returned to its closed position.

15. The sanitary facility as claimed in one of claims 10 to 14, wherein the technical space (32) accommodates a motorized rotary cylindrical brush (55) with a vertical axis, and wherein the ceiling of the wet room has a brush support and guide rail forming a track (60) ensuring that the whole wet room is cleaned.

16. The sanitary facility as claimed in claim 15, wherein the technical space (32) also serves as a storage space for the banquette (46) and for the water retention element (49) and wherein it accommodates a second motorized rotary cylindrical brush (56) to clean the banquette, the water retention element and their storage space (57).

## Patentansprüche

1. Rechteckförmige, insbesondere quadratische Sanitärzelle mit mehrfacher Verwendungsmöglichkeit, welche im wesentlichen zwei verschiedene Räume, nämlich einen Raum für eine Trockentoilette (A) mit einem Waschbecken und einem WC sowie einen rechteckförmigen Waschraum (B) umfasst, der als Bad, Dusche und/oder als Planschbecken verwendet werden kann, wobei der Boden des Waschraums näherungsweise eben ist und dieser Waschraum einerseits durch wenigstens zwei aneinandergrenzende Wände der Sanitärzelle und andererseits durch ein bewegliches Element (38) begrenzt wird, derart, dass sie Oberfläche des Waschraums (B) und mit diesem die Oberfläche des Raums für die Trockentoilette (A) variiert werden kann, **dadurch gekennzeichnet, dass** das bewegliche Element (38) senkrecht zu einer Seite der Sanitärzelle angeordnet ist und in einer parallel zu dieser Seite orientierten Richtung verschoben werden kann und dabei senkrecht zu dieser Seite orientiert bleibt.

2. Sanitärzelle nach Anspruch 1, **dadurch gekennzeichnet, dass** das bewegliche Element (38) bis zum Hintergrund des Waschraums verschiebbar ist, derart, dass die Oberfläche dieses Waschraums zwischen praktisch Null und einem bestimmten maximalen Wert variieren kann.

3. Sanitärzelle nach Anspruch 2, **dadurch gekennzeichnet, dass** die Seitenwände des Waschraums ein Gesims aufweisen und dass das bewegliche Element aus einer auf diesem Gesims aufgehängten Zwischenwand besteht, die mit Mitteln zum Rollen auf diesem Gesims versehen ist.

4. Sanitärzelle nach Anspruch 3, **dadurch gekennzeichnet, dass** die bewegliche Zwischenwand mit Fächern zum Unterbringen von Gegenständen versehen ist.

5. Sanitärzelle nach einem der Ansprüche 1 bis 4, **dadurch gekennzeichnet, dass** sie ein Hilfselement aufweist, das im wesentlichen die Form eines rechteckförmige Parallelepipeds hat und im Waschraum entweder als Bank oder als Wasserstauwand, dass heisst als vierte Wand einer rechteckförmigen Badewanne oder eines rechteckförmigen Planschbeckens, verwendet werden kann, deren bzw. dessen drei andere Seiten von den Wänden der Sanitärzelle gebildet werden.

6. Sanitärzelle nach Anspruch 5, **dadurch gekennzeichnet, dass** sie Mittel aufweist, um das Hilfselement dicht gegen den Boden und gegen die Seitenwände der Sanitärzelle zu pressen.

7. Sanitärzelle nach Anspruch 6, **dadurch gekennzeichnet, dass** die Seitenwände des Waschraums eine Konsole mit einer geneigten Unterseite haben, derart, dass der Abstand zwischen dem Boden und der Konsole progressiv in Richtung der betreffenden Wände abnimmt, dass die kleineren Schmalseiten des Hilfselements sowie wenigstens eine seiner langen Schmalseiten elastisch verformbar sind und dass die Länge und die Höhe des Hilfselements im unbelasteten Zustand etwas grösser als die Breite der Sanitärzelle bzw. als der kleinste Abstand zwischen den Konsolen und dem Boden ist, so dass das Hilfselement, wenn es sich an Ort und Stelle befindet, in Längsrichtung zwischen den Wänden des Waschraums und vertikal zwischen den Konsolen und dem Boden komprimiert wird.

8. Sanitärzelle, **dadurch gekennzeichnet, dass** das Hilfselement mit einem dichten elastischen Polstermaterial überzogen ist und Mittel zur eigenen Ausdehnung seiner Abmessungen enthält, welche es erlauben, das Hilfselement gegen die Wände des Waschraums und gegen den Boden zu pressen.

9. Sanitärzelle nach Anspruch 4, **dadurch gekennzeichnet, dass** die bewegliche Zwischenwand in ihrem oberen Bereich ein sich über ihre gesamte Breite erstreckendes Fach, das eine um eine horizontale Achse drehbare mechanisierte und verschiebbare Walzenbürste enthält, und ein vertikales Fach aufweist, das eine um eine vertikale Achse drehbare mechanisierte und verschiebbare Walzenbürste enthält, und dass die Sanitärzelle Antriebsmittel zum Drehen und zum Verschieben der Walzenbürsten zur Reinigung alle Oberflächen des Waschraums aufweist.

10. Sanitärzelle nach Anspruch 1 oder 2, **dadurch gekennzeichnet, dass** der Waschraum (B) von zwei aneinandergrenzenden Wänden der Sanitärzelle und von einer Innenwand (33) begrenzt ist, die aus einer Wand mit einem geschlossenen Technikraum (32) besteht, von der wenigstens ein Bereich im Abstand von der gegenüberliegenden Wand der Sanitärzelle liegt, so dass ein Nutzraum (35) gebildet wird.

11. Sanitärzelle nach Anspruch 10, **dadurch gekennzeichnet, dass** im Waschraum (B) die dem Technikraum gegenüberliegende Wand der Sanitärzelle eine horizontale Nut (45) hat und der unter Bereich der Wand (33) des Technikraums eine niedrige Wand (44) bildet, wobei diese niedrige Wand und die erwähnte Nut dazu bestimmt sind, eine Bank (46) zu tragen.

12. Sanitärzelle nach Anspruch 11, **dadurch gekennzeichnet, dass** sie ein Wasserstauelement aufweist, dessen Umfang komprimierbar ist und welches durch die Bank (46) gegen den Boden und gegen die Wände des Waschraums gepresst wird.

13. Sanitärzelle nach Anspruch 12, **dadurch gekennzeichnet, dass** das Stauelement (49) aus einem starren Kern (50) besteht, dessen Umfang ein V- oder U-Profil oder ein ähnliches Profil hat, in welchem ein elastisch verformbares Material (52) angeordnet ist.

14. Sanitärzelle nach einem der Ansprüche 1, 2 oder 13, **dadurch gekennzeichnet, dass** die Wand des Technikraums (33), die den Waschraum begrenzt, wenigstens eine Tür (41, 42) hat, deren Unterseite sich in einer Höhe befindet, die etwas höher ist als die Höhe des Wasserstauelements (49), so dass die Bank (46) an einem ihrer Enden schräg in die Nut (45) der Wand der Sanitärzelle eingeschoben und dann auf das Wasserstauelement abgesenkt werden kann, wobei die Bank in ihrer Komprimierungsstellung durch die in ihre geschlossene Stellung gebrachte Tür (41, 42) gehalten wird.

15. Sanitärzelle nach einem der Ansprüche 10 bis 14, **dadurch gekennzeichnet, dass** der Technikraum (32) eine um eine vertikale Achse drehbare motorisierte Walzenbürste (55) enthält und dass die Decke des Waschraums eine Trag- und Führungsschiene für die Walzenbürste aufweist, wobei diese Schiene eine die vollständige Reinigung des Waschraums gewährleistende Bahn (60) bildet.

16. Sanitärzelle nach Anspruch 15, **dadurch gekennzeichnet, dass** der Technikraum (32) auch als Raum zur Aufnahme der Bank (46) und des Wasserstauelements (49) dient und dass er eine zweite drehbare motorisierte Walzenbürste (56) zum Reinigen der Bank und des Wasserstauelements sowie des erwähnten Aufnahmeraums (57) enthält.
